# EUROPÄISCHE PATENTSCHRIFT

(11) **EP 4 076 829 B1**
(45) Veröffentlichungstag und Bekanntmachung des Hinweises auf die Patenterteilung: **26.07.2023**
(21) Anmeldenummer: 20838946.0
(22) Anmeldetag: 18.12.2020
(51) Int. Cl.: B23K 26/211, B23K 26/32, B23K 35/22, B23K 103/04, B23K 101/16, B23K 101/18

(54) **STUMPFSTOSSLASERTIEFSCHWEISSVERFAHREN**
BUTT JOINT DEEP PENETRATION LASER WELDING METHOD
SOUDAGE PROFOND PAR LASER POUR JOINT EN BOUT-À-BOUT

(30) Priorität: 20.12.2019 DE 102019220471; 17.12.2020 DE 102020216163
(43) Veröffentlichungstag der Anmeldung: 26.10.2022
(73) Patentinhaber: SMS Group GmbH, 40237 Düsseldorf (DE)
(72) Erfinder: ARTEL, Jens, 57399 Kirchhundem (DE); SEEGERS, Sebastian, 53859 Niederkassel (DE); DORNSCHEIDT, Christian, 40629 Düsseldorf (DE); KÜMMEL, Lutz, 41363 Jüchen (DE); SZONN, Jens, 40591 Düsseldorf (DE)
(74) Vertreter: Kross, Ulrich
(86) Internationale Anmeldenummer: PCT/EP2020/086929
(87) Internationale Veröffentlichungsnummer: WO 2021/123097

(56) Entgegenhaltungen:
- DE-A1-102017 120 611
- DE-B4-102017 120 611
- JP-A- H0 741 841
- JP-A- 2002 321 088
- US-A1- 2012 241 420
- US-A1- 2014 124 481

## Beschreibung

Die Erfindung betrifft ein Stumpfstoßlasertiefschweißverfahren zum Fügen voneinander zugewandten Endabschnitten von Stahlflachprodukten, die jeweils einen Kohlenstoffgehalt Cs < 0,02 % aufweisen.

Das Schweißen von ULC-Stahlgüten mit einem Festkörperlaser ist charakterisiert durch ein sehr unruhiges Schweißbad mit starkem Durchsacken der Nahtwurzel. Dieser Effekt ist vom Schweißen von Baustählen oder höherlegierten Stählen nicht bekannt.

Aktuell werden Werkstückabschnitte, wie beispielsweise zwei Metallbandenden, zunächst auf über 500°C vorgewärmt und dann mit langsamer Vorschubgeschwindigkeit verschweißt. ULC-Stahlgüten lassen sich problemlos mit höherlegierten Stahlgüten verschweißen, was im Bereich von Coilverbindungen in Bandanlagen durch eine entsprechende Produktionsplanung erreicht werden kann.

Die vorgenannte Lösung bringt nur eine geringfügige Verbesserung hinsichtlich Nahtgeometrie und Nahtfestigkeit mit sich, ist aber für die Anwendung grundsätzlich ausreichend. Nachteilig ist die langsame Schweißgeschwindigkeit und der damit einhergehende Produktivitätsverlust. Zudem wird das Equipment durch die hohe Vorwärmtemperatur thermisch hoch belastet, was die Lebensdauer einiger Komponenten reduziert. Zusätzlich ist das Prozessfenster zur Durchführung des Schweißvorgangs relativ klein, so dass eine reproduzierbare Nahtqualität nicht gegeben ist. In Bandanlagen kann durch angepasste Produktionsplanung das Problem umgangen werden, was von Kunden der Stahlindustrie in der Regel abgelehnt wird.

DE 10 2018 107 291 A1 betrifft ein Verfahren zum Verschweißen von Stahlblechen aus mit einer Aluminium-Siliziumkorrosionsschutzschicht beschichteten Stahlmaterialien, wobei beim Verschweißen der Bleche ein Schweißzusatzdraht verwendet wird.

EP 2 736 672 B1 betrifft ein Verfahren zur Herstellung eines geschweißten Stahlteils, wobei ein erstes Stahlblech und ein zweites Stahlblech miteinander verschweißt werden.

DE 10 2017 120 611 A1 betrifft ein Verfahren zum Schmelzschweißen eines oder mehrerer Stahlbleche aus presshärtbarem Stahl, bei dem das Schmelzschweißen unter Zuführung von Zusatzdraht in das ausschließlich mittels eines Laserstrahls erzeugte Schmelzbad erfolgt.

WO 2020 / 136 585 A1 betrifft ein Verfahren zum Herstellen eines geschweißten Stahlrohlings, wobei zwei vorbeschichtete Bleche durch Stumpfschweißen unter Verwendung eines Zusatzdrahts miteinander verbunden werden.

US 2014/124481 A1 offenbart ein Verfahren gemäß dem Oberbegriff von Anspruch 1.

Eine Aufgabe der Erfindung ist es, ein Stumpfstoßlasertiefschweißverfahren der eingangs genannten Art dahingehend zu optimieren, dass mit ihm eine verbesserte Schweißnahtqualität hinsichtlich Geometrie und Festigkeit erzielbar ist.

Diese Aufgabe wird durch den unabhängigen Patentanspruch gelöst. Vorteilhafte Ausgestaltungen sind in der nachfolgenden Beschreibung, den abhängigen Patentansprüchen und der Figur wiedergegeben, wobei diese Ausgestaltungen jeweils für sich genommen oder in Kombination von wenigstens zwei dieser Ausgestaltungen miteinander einen weiterbildenden, insbesondere auch bevorzugten oder vorteilhaften Aspekt der Erfindung darstellen können.

Gemäß einem erfindungsgemäßen Stumpfstoßlasertiefschweißverfahren zum Fügen voneinander zugewandten Endabschnitten von Stahlflachprodukten, die jeweils einen Kohlenstoffgehalt Cs < 0,02 % aufweisen, wird wenigstens ein kohlenstoffhaltiges Trägermaterial in einen Stumpfstoßspalt zwischen den Endabschnitten eingebracht oder auf wenigstens einen Endabschnitt aufgebracht, dessen Kohlenstoffgehalt C_{T} ≥ 20·C_{S}, vorzugsweise C_{T} ≥ 100·C_{S}, beträgt, und/oder wird Kohlenstoff derart in den Stumpfstoßspalt eingebracht oder auf wenigstens einen Endabschnitt aufgebracht, dass ein Volumen des in den Stumpfstoßspalt eingebrachten Kohlenstoffs 1 % bis 20 % eines Volumens einer durch einen Stumpfstoßlasertiefschweißvorgang hergestellten Schmelze entspricht.

Mit dem erfindungsgemäßen Stumpfstoßlasertiefschweißverfahren lassen sich Stahlflachprodukte, beispielsweise Metallbänder oder Bleche, aus ULC-Stahl (ULC, IF) mit einem Kohlenstoffgehalt Cs < 0,02 %, insbesondere Cs < 0,01 %, miteinander verschweißen, indem die einander zugewandten Endabschnitte der Stahlflachprodukte zur Herstellung einer hinsichtlich Geometrie und Festigkeit verbesserten Schweißnahtqualität mittels Laserstrahlung im Zuge eines Tiefschweißvorgangs zur Ausbildung einer Stumpfstoßverbindung miteinander verschweißt werden. Hierbei wird erfindungsgemäß vor einer Durchführung des Tiefschweißvorgangs und/oder während der Durchführung des Tiefschweißvorgangs Kohlenstoff über das Trägermaterial oder in reiner Form in einer derartigen Menge in den Stumpfstoßspalt zwischen den Endabschnitten eingebracht oder auf wenigstens einen Endabschnitt eines Stahlflachprodukts aufgebracht, dass, wie Versuche bereits gezeigt haben, der Tiefschweißvorgang derart stark beruhigt wird, dass mit dem erfindungsgemäßen Verfahren eine Schweißgeschwindigkeit, eine Schweißleistung und ein stabiles Prozessfenster für den Schweißvorgang realisiert werden können, wie sie vergleichsweise von dem Schweißen von Baustählen und höherlegierten ferritischen Stählen bekannt sind. Zudem ist mit dem erfindungsgemäßen Verfahren bzw. der damit einhergehenden Einbringung einer ausreichenden Kohlenstoffmenge in den Tiefschweißvorgang eine deutlich verbesserte Schweißnahtgeometrie herstellbar. Die Festigkeit der mit dem erfindungsgemäßen Verfahren hergestellten Schweißverbindung ist insbesondere für die Herstellungen von Coilverbindungen bzw. von Bandenden von zu Coils aufgewickelten bzw. aufwickelbaren Metallbändern in Bandanlagen mehr als ausreichend. Aufgrund der mit dem erfindungsgemäßen Verfahren realisierbaren höheren Schweißgeschwindigkeiten sind zudem verkürzte Zykluszeiten möglich, was die Produktivität erhöht.

Vorzugsweise wird das erfindungsgemäße Verfahren derart durchgeführt, dass das Trägermaterial während der Durchführung des Tiefschweißvorgangs weitestgehend oder vollständig verdampft wird, um eine Verbindung zwischen den Stahlflachprodukten zu schaffen, deren mechanische und/oder chemische Eigenschaften im Wesentlichen den mechanischen und/oder chemischen Eigenschaften der Stahlflachprodukte entsprechen. Im Idealfall ist der Kohlenstoffgehalt im geschweißten Gefüge derart gering, dass Inhomogenitäten im Gefüge und in Festigkeitseigenschaften möglichst gering gehalten werden.

Die mit dem erfindungsgemäßen Verfahren schweißbaren Stahlflachprodukte können einen derart geringen Kohlenstoffgehalt aufweisen, dass es sich bei den Stahlflachprodukten nahezu um Reineisen handelt. Durch das erfindungsgemäße Einbringen einer ausreichenden Kohlenstoffmenge in den Stumpfstoßspalt bzw. das erfindungsgemäße Aufbringen einer ausreichenden Kohlenstoffmenge auf wenigstens einen Endabschnitt eines Stahlflachprodukts wird der Kohlenstoffgehalt der mit der Laserstrahlung gebildeten Schmelze auf geeignete Werte erhöht, und zwar bei Einsatz des kohlenstoffhaltigen Trägermaterials auf mindestens das Zwanzigfache des Kohlenstoffgehalts der Stahlflachprodukte.

Gemäß dem erfindungsgemäßen Verfahren wird also Kohlenstoff in hoher Menge in den Fügestumpfstoß eingebracht bzw. auf wenigstens einen Endabschnitt eines Stahlflachprodukts aufgebracht. Hierbei soll jede Art der hierzu geeigneten Einbringung bzw. Aufbringung von Kohlenstoff von der Erfindung umfasst sein.

Das Einbringen des kohlenstoffhaltigen Trägermaterials bzw. des Kohlenstoffs in den Stumpfstoßspalt kann insbesondere durch ein Aufbringen des Trägermaterials bzw. des Kohlenstoffs auf lediglich eine der beiden einander gegenüberliegenden Fügestoßflächen der Endabschnitte der Stahlflachprodukte oder durch ein Aufbringen des Trägermaterials bzw. des Kohlenstoffs auf beide Fügestoßflächen erfolgen.

Wird Kohlenstoff derart in den Stumpfstoßspalt eingebracht oder auf wenigstens einen Endabschnitt aufgebracht, dass das Volumen des in den Stumpfstoßspalt eingebrachten Kohlenstoffs 1 % bis 20 % des Volumens der durch den Stumpfstoßlasertiefschweißvorgang hergestellten Schmelze entspricht, kann beispielsweise reiner Kohlenstoff, insbesondere in Form von Graphit, eingesetzt werden.

Beim Lasertiefschweißen wird das Material mit sehr hohen Strahlintensitäten bearbeitet. Anders als beim Wärmeleitschweißen entsteht dadurch zusätzlich zur Metallschmelze auch Metalldampf, der die Schmelze teilweise verdrängt und zur Ausbildung einer Dampfkapillare (Keyhole) führt. Das Lasertiefschweißen ist durch eine hohe Prozessgeschwindigkeit gekennzeichnet. Die Wärmeeinflusszone ist beim Lasertiefschweißen stets eng begrenzt und der Materialverzug ist entsprechend gering. Zurück bleibt eine schmale, gleichmäßig strukturierte Schweißnaht, deren Tiefenmaß oft größer als ihre Breite ist. Das Lasertiefschweißen kann in Form eines Durchschweißens erfolgen, wobei der Laserstrahl an einer der Laserstrahlungsquelle abgewandt angeordneten Unterkante des jeweiligen Stahlflachprodukts wieder aus dem Sumpfstoßspalt austritt. Hierbei kann eine Nahtwurzel hergestellt werden.

Ein Stahlflachprodukt kann im Rahmen der Erfindung ein Stahlblech oder ein zu einem Coil aufwickelbares Stahlband sein. Das jeweilige Stahlflachprodukt kann eine Dicke im Bereich von 0,5 mm bis 10 mm aufweisen, da Stahlflachprodukte mit einer Dicke in diesem Bereich mittels des erfindungsgemäßen Verfahrens optimal gefügt werden können.

Gemäß einer vorteilhaften Ausgestaltung wird als Laserstrahlquelle ein Festkörperlaser verwendet. Der Festkörperlaser ist für den erfindungsgemäßen Einsatz ausreichend robust und kompakt ausgebildet.

Gemäß einer weiteren vorteilhaften Ausgestaltung wird als Laserstrahlquelle ein Faserlaser oder ein Scheibenlaser oder ein Diodenlaser verwendet.

Gemäß einer weiteren vorteilhaften Ausgestaltung wird Laserstrahlung mit einer Wellenlänge in einem Bereich von 980 nm bis 1120 nm verwendet. Der Tiefschweißvorgang lässt sich wegen der erfindungsgemäßen Einbringung einer großen Kohlenstoffmenge in den Stumpfstoßspalt bzw. Aufbringung einer großen Kohlenstoffmenge auf wenigstens einen Endabschnitt eines Stahlflachprodukts in dem genannten Wellenlängenbereich sehr stabil halten, was in diesem Wellenlängenbereich mit herkömmlichen Verfahren, bei denen beispielsweise ein Kohlenstoffdioxidlaser zum Erzeugen von Laserstrahlung eingesetzt wird, beim Verschweißen von ULC-Stahlgüten mit einem Kohlenstoffgehalt von Cs < 0,02 % nicht möglich ist.

Gemäß einer weiteren vorteilhaften Ausgestaltung wird eine Schweißgeschwindigkeit in einem Bereich von 1 m/min bis 10 m/min, vorzugsweise in einem Bereich von 4 m/min bis 10 m/min, besonders bevorzugt in einem Bereich von 7 m/min bis 10 m/min, verwendet.

Gemäß einer weiteren vorteilhaften Ausgestaltung wird als Trägermaterial ein metallisches Pulver verwendet. Das metallische Pulver ist mit einem geeignet hohen Kohlenstoffgehalt im Verhältnis zum Kohlenstoffgehalt der Stahlflachprodukte auszuwählen. Das metallische Pulver kann am Ende eines Schnittvorgangs, durch den ein Teil des jeweiligen Stahlflachprodukts zur Ausbildung einer Fügestoßfläche an dem Stahlflachprodukt abgetrennt wird, und vor dem Fügevorgang bzw. Schweißvorgang aktiv oder passiv auf die Fügestoßfläche aufgebracht werden, wobei das jeweilige metallische Pulver unter Nutzung von Adhäsionskräften oder von elektrostatischen Kräften an der Fügestoßfläche anhaften kann. Das metallische Pulver kann als Kohlenstoffbestandteil Graphit aufweisen.

Gemäß einer weiteren vorteilhaften Ausgestaltung wird als Trägermaterial eine graphithaltige metallische Folie verwendet. Die Folie stellt das Trägermaterial dar und weist einen geeignet hohen Kohlenstoffgehalt auf. Die Folie kann am Ende des oben beschriebenen Schnittvorgangs auf die jeweilige Fügestoßfläche aufgebracht werden, beispielsweise in Form eines Klebebands aufgeklebt werden.

Gemäß einer weiteren vorteilhaften Ausgestaltung wird als Trägermaterial ein graphithaltiges Fluid verwendet. Das Fluid stellt das Trägermaterial dar und weist einen geeignet hohen Kohlenstoffgehalt auf. Das Fluid ist vorzugsweise schnell trocknend ausgebildet. Das Fluid kann am Ende des oben beschriebenen Schnittvorgangs auf die jeweilige Fügestoßfläche aufgebracht werden. Das Fluid kann beispielsweise eine Flüssigkeit oder eine zähflüssige Paste sein.

Gemäß einer weiteren vorteilhaften Ausgestaltung wird das Fluid nach seinem Einbringen in den Stumpfstoßspalt aktiv getrocknet. Das aktive Trocknen des Fluids kann beispielsweise unter Verwendung von Induktion bzw. Induktionswärme oder von UV-Strahlung oder durch aktives Heizen, beispielsweise durch eine Flamme oder dergleichen, erfolgen.

Gemäß einer weiteren vorteilhaften Ausgestaltung wird als Trägermaterial ein Fülldraht oder ein Blech verwendet. Der Fülldraht bzw. das Blech stellt das Trägermaterial dar und weist einen geeignet hohen Kohlenstoffgehalt auf. Der Fülldraht kann auch als Schweißdraht bezeichnet werden.

Gemäß einer weiteren vorteilhaften Ausgestaltung wird das Trägermaterial vor dem Einsatz der Laserstrahlung auf eine Stoßfläche von wenigstens einem Endabschnitt aufgebracht, wonach der Stumpfstoßspalt geschlossen wird.

Im Folgenden wird die Erfindung unter Bezugnahme auf die anliegende Figur anhand einer bevorzugten Ausführungsform beispielhaft erläutert, wobei die nachfolgend erläuterten Merkmale sowohl jeweils für sich genommen als auch in Kombination von wenigstens zwei dieser Merkmale miteinander einen vorteilhaften oder weiterbildenden Aspekt der Erfindung darstellen können. Es zeigt:

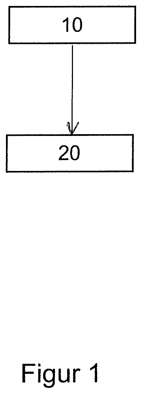

- Figur 1:: ein Blockschema eines Ausführungsbeispiels für ein erfindungsgemäßes Stumpfstoßlasertiefschweißverfahren.

Figur 1 zeigt ein Blockschema eines Ausführungsbeispiels für ein erfindungsgemäßes Stumpfstoßlasertiefschweißverfahren zum Fügen voneinander zugewandten Endabschnitten von Stahlflachprodukten, die jeweils einen Kohlenstoffgehalt Cs < 0,02 % aufweisen.

In Verfahrensschritt 10 wird ein kohlenstoffhaltiges Trägermaterial in einen Stumpfstoßspalt zwischen einander zugewandt angeordnete Endabschnitte von Stahlflachprodukten eingebracht oder auf wenigstens einen Endabschnitt aufgebracht, dessen Kohlenstoffgehalt C_{T} ≥ 20·C_{S}, vorzugsweise C_{T} ≥ 100·C_{S}, ist, wobei Cs der Kohlenstoffgehalt zumindest desjenigen Stahlflachprodukts mit dem höheren Kohlenstoffgehalt ist. Additiv oder alternativ wird in Verfahrensschritt 10 Kohlenstoff derart in den Stumpfstoßspalt eingebracht oder auf wenigstens einen Endabschnitt aufgebracht, dass ein Volumen des in den Stumpfstoßspalt eingebrachten Kohlenstoffs 1 % bis 20 % eines Volumens einer durch einen Stumpfstoßlasertiefschweißvorgang hergestellten Schmelze entspricht.

Das Trägermaterial bzw. der, insbesondere reine, Kohlenstoff wird in Verfahrensschritt 16, vor dem Einsatz der Laserstrahlung in Verfahrensschritt 20, auf eine Stoßfläche von wenigstens einem Endabschnitt aufgebracht, wonach der Stumpfstoßspalt geschlossen wird. Als Trägermaterial kann ein metallisches Pulver verwendet werden. Alternativ kann als Trägermaterial eine graphithaltige metallische Folie verwendet werden. Alternativ kann als Trägermaterial ein graphithaltiges Fluid verwendet werden, das nach seinem Einbringen in den Stumpfstoßspalt aktiv getrocknet werden kann. Alternativ kann als Trägermaterial ein Fülldraht oder ein Blech verwendet werden.

In Verfahrensschritt 20 wird Laserstrahlung erzeugt und auf den Stumpfstoßspalt gerichtet, in den das kohlenstoffhaltige Trägermaterial bzw. der Kohlenstoff eingebracht worden ist, so dass ein Stumpfstoßlasertiefschweißvorgang durchführbar ist. Hierbei wird als Laserstrahlquelle ein Festkörperlaser verwendet. Insbesondere kann als Laserstrahlquelle ein Faserlaser oder ein Scheibenlaser oder ein Diodenlaser verwendet werden. Die Laserstrahlung wird mit einer Wellenlänge in einem Bereich von 980 nm bis 1120 nm erzeugt und verwendet. Der in Verfahrensschritt 20 durchgeführte Lasertiefschweißvorgang wird mit einer Schweißgeschwindigkeit in einem Bereich von 1 m/min bis 10 m/min durchgeführt.

### Bezugszeichenliste

- 10: Verfahrensschritt (Einbringen Trägermaterial)
- 20: Verfahrensschritt (Lasertiefschweißvorgang)

## Patentansprüche

1. Stumpfstoßlasertiefschweißverfahren zum Fügen voneinander zugewandten Endabschnitten von Stahlflachprodukten, die jeweils einen Kohlenstoffgehalt C_{S} < 0,02 % aufweisen,
**dadurch gekennzeichnet,**
**dass** wenigstens ein kohlenstoffhaltiges Trägermaterial in einen Stumpfstoßspalt zwischen den Endabschnitten eingebracht oder auf wenigstens einen Endabschnitt aufgebracht wird, dessen Kohlenstoffgehalt C_{T} ≥ 20·C_{S}, vorzugsweise C_{T} ≥ 100·C_{S}, ist, wobei Cs der Kohlenstoffgehalt zumindest desjenigen Stahlflachprodukts mit dem höheren Kohlenstoffgehalt ist; und/oder dass Kohlenstoff derart in den Stumpfstoßspalt eingebracht oder auf wenigstens einen Endabschnitt aufgebracht wird, dass ein Volumen des in den Stumpfstoßspalt eingebrachten Kohlenstoffs 1 % bis 20 % eines Volumens einer durch einen Stumpfstoßlasertiefschweißvorgang hergestellten Schmelze entspricht.

2. Stumpfstoßlasertiefschweißverfahren nach Anspruch 1, **dadurch gekennzeichnet, dass** als Laserstrahlquelle ein Festkörperlaser verwendet wird.

3. Stumpfstoßlasertiefschweißverfahren nach Anspruch 2, **dadurch gekennzeichnet, dass** als Laserstrahlquelle ein Faserlaser oder ein Scheibenlaser oder ein Diodenlaser verwendet wird.

4. Stumpfstoßlasertiefschweißverfahren nach Anspruch 2 oder 3, **dadurch gekennzeichnet, dass** Laserstrahlung mit einer Wellenlänge in einem Bereich von 980 nm bis 1120 nm verwendet wird.

5. Stumpfstoßlasertiefschweißverfahren nach einem der Ansprüche 2 bis 4, **dadurch gekennzeichnet, dass** eine Schweißgeschwindigkeit in einem Bereich von 1 m/min bis 10 m/min verwendet wird.

6. Stumpfstoßlasertiefschweißverfahren nach einem der Ansprüche 1 bis 5, **dadurch gekennzeichnet, dass** als Trägermaterial ein metallisches Pulver verwendet wird.

7. Stumpfstoßlasertiefschweißverfahren nach einem der Ansprüche 1 bis 5, **dadurch gekennzeichnet, dass** als Trägermaterial eine graphithaltige metallische Folie verwendet wird.

8. Stumpfstoßlasertiefschweißverfahren nach einem der Ansprüche 1 bis 5, **dadurch gekennzeichnet, dass** als Trägermaterial ein graphithaltiges Fluid verwendet wird.

9. Stumpfstoßlasertiefschweißverfahren nach Anspruch 8, **dadurch gekennzeichnet, dass** das Fluid nach seinem Einbringen in den Stumpfstoßspalt aktiv getrocknet wird.

10. Stumpfstoßlasertiefschweißverfahren nach einem der Ansprüche 1 bis 5, **dadurch gekennzeichnet, dass** als Trägermaterial ein Fülldraht oder ein Blech verwendet wird.

11. Stumpfstoßlasertiefschweißverfahren nach einem der Ansprüche 6 bis 9, **dadurch gekennzeichnet, dass** das Trägermaterial vor dem Einsatz der Laserstrahlung auf eine Stoßfläche von wenigstens einem Endabschnitt aufgebracht wird, wonach der Stumpfstoßspalt geschlossen wird.

## Claims

1. Butt-joint deep-penetration laser welding method for joining mutually facing end sections of flat steel products each having a carbon content Cs < 0.2%,
**characterised in that**
at least one carrier material containing carbon is introduced into a butt-joint gap between the end sections or is applied to at least one end section, the carbon content of the carrier material being C_{T} ≥ 20 · C_{S}, preferably C_{T} ≥ 100 · C_{S}, wherein Cs is the carbon content of at least that flat steel product with the higher carbon content; and/or
carbon is introduced into the butt-joint gap and/or applied to at least one end section in such a way that a volume of the carbon introduced into the butt-joint gap corresponds with 1% to 20% of a volume of a melt produced by a butt-joint deep-penetration laser welding method.

2. Butt-joint deep-penetration laser welding method according to claim 1, **characterised in that** a solid-state laser is used as laser radiation source.

3. Butt-joint deep-penetration laser welding method according to claim 2, **characterised in that** a fibre laser or a disc laser or a diode laser is used as laser radiation source.

4. Butt-joint deep-penetration laser welding method according to claim 2 or 3, **characterised in that** laser radiation with a wavelength in a range of 980 nm to 1120 nm is used.

5. Butt-joint deep-penetration laser welding method according to any one of claims 2 to 4, **characterised in that** a welding speed in a range of 1 m/min to 10 m/min is used.

6. Butt-joint deep-penetration laser welding method according to any one of claims 1 to 5, **characterised in that** a metallic powder is used as carrier material.

7. Butt-joint deep-penetration laser welding method according to any one of claims 1 to 5, **characterised in that** a metallic foil with graphite content is used as carrier material.

8. Butt-joint deep-penetration laser welding method according to any one of claims 1 to 5, **characterised in that** a fluid with graphite content is used as carrier material.

9. Butt-joint deep-penetration laser welding method according to claim 8, **characterised in that** the fluid is actively dried after introduction thereof into the butt-joint gap.

10. Butt-joint deep-penetration laser welding method according to any one of claims 1 to 5, **characterised in that** a filler wire or a sheet is used as carrier material.

11. Butt-joint deep-penetration laser welding method according to any one of claims 6 to 9, **characterised in that** prior to use of the laser radiation the carrier material is applied to a butt surface of at least one end section, after which the butt-joint gap is closed.

## Revendications

1. Procédé de soudage profond au laser en bout à bout pour assembler des parties d'extrémité de produits plats en acier disposées en face l'une de l'autre, ayant chacun une teneur en carbone Cₛ < 0,02 %,
**caractérisé en ce que**
au moins un matériau de support contenant du carbone est introduit dans un joint d'about entre les parties d'extrémité ou est appliqué sur au moins une partie d'extrémité, dont la teneur en carbone C_{T} ≥ 20·Cs, de préférence C_{T} ≥ 100·Cs, où Cₛ est la teneur en carbone d'au moins le produit plat en acier ayant la teneur en carbone la plus élevée ; et/ou
du carbone est introduit dans le joint d'about ou appliqué sur au moins une partie d'extrémité de telle sorte qu'un volume de carbone introduit dans le joint d'about représente 1 % à 20 % d'un volume d'une masse fondue produite par une opération de soudage profond au laser en bout à bout.

2. Procédé de soudage profond au laser en bout à bout selon la revendication 1, **caractérisé en ce que** l'on utilise comme source de faisceau laser un laser à l'état solide.

3. Procédé de soudage profond au laser en bout à bout selon la revendication 2, **caractérisé en ce que** l'on utilise comme source de faisceau laser un laser à fibre, un laser à disque ou un laser à diode.

4. Procédé de soudage profond au laser en bout à bout selon la revendication 2 ou 3, **caractérisé en ce que** l'on utilise un rayonnement laser ayant une longueur d'onde comprise dans une plage allant de 980 nm à 1120 nm.

5. Procédé de soudage profond au laser en bout à bout selon l'une quelconque des revendications 2 à 4, **caractérisé en ce que** l'on utilise une vitesse de soudage comprise dans une plage allant de 1 m/min à 10 m/min.

6. Procédé de soudage profond au laser en bout à bout selon l'une quelconque des revendications 1 à 5, **caractérisé en ce que** l'on utilise une poudre métallique comme matériau de support.

7. Procédé de soudage profond au laser en bout à bout selon l'une quelconque des revendications 1 à 5, **caractérisé en ce que** l'on utilise comme matériau de support une feuille métallique contenant du graphite.

8. Procédé de soudage profond au laser en bout à bout selon l'une quelconque des revendications 1 à 5, **caractérisé en ce que** l'on utilise comme matériau de support un fluide contenant du graphite.

9. Procédé de soudage profond au laser en bout à bout selon la revendication 8, **caractérisé en ce que** le fluide est séché activement après son introduction dans le joint d'about.

10. Procédé de soudage profond au laser en bout à bout selon l'une quelconque des revendications 1 à 5, **caractérisé en ce que** l'on utilise comme matériau de support un fil fourré ou une tôle.

11. Procédé de soudage profond au laser en bout à bout selon l'une quelconque des revendications 6 à 9, **caractérisé en ce que** le matériau de support est appliqué sur une surface d'aboutement d'au moins une partie d'extrémité avant l'utilisation du rayonnement laser, après quoi le joint d'about est fermé.
